# EUROPEAN PATENT APPLICATION

(11) **EP 2 783 848 A1**
(43) Date of publication of application: **01.10.2014**
(21) Application number: 13461511.1
(22) Date of filing: 25.03.2013
(51) Int. Cl.: B32B 27/08, B32B 29/00, B65D 81/20, B65D 81/26

(54) **Package**

(71) Applicant: Zachodniopomorski Uniwersytet Technologiczny w Szczecinie, 70-310 Szczecin (PL)
(72) Inventor: Bartkowiak, Artur, 71-667 Szczecin (PL); Lisiecki, Slawomir, 72-006 Mierzyn (PL); Mizielinska, Malgorzata, 70-556 Szczecin (PL)
(74) Representative: Zawadzka, Renata

(57) **Abstract**

A package, according to the present invention, performed from film or laminated paper containing a bioactive atmosphere modifier (2) of packaged food and permeable to the gases generated by the modifier (2), is characterized by that, said package contains it at least one chamber (1) in the form of uniform or welding sleeve. In the chamber (1) is located a bioactive atmosphere modifier (2) of packaged food and an odour absorbent (3). The package has an intermittent weld (4) on at least one side. Both atmosphere modifier (2) and odour absorbent (3) can be located in the separate pockets made from a hydrophilic nonwoven fabric (5).

## Description

This invention relates to a package with bioactive modifier of packaged food atmosphere. This package constitutes a sachet, which is placed in the package with food or comprises a fragment of packaged food. This package permits for gas exchange between the chamber interior containing a bioactive atmosphere modifier and the external environment with the food product due to a microbiological consumption of oxygen and the generation of ethanol, what extends the shelf live of packaged product.

The application of ethanol and carbon dioxide as the antibacterial agents is well documented in the literature. This is a particularly effective solution against moulds, but it can also effectively inhibit the growth of yeasts and bacteria. Ethanol can be sprayed directly onto the food products before packaging. Several reports have demonstrated that the shelf life of the food products such as bakery products can be significantly extended after spraying with an aqueous solution with 95% content of ethanol to obtain the target concentration of 0.5-1.5% (g/g of dry matter) in the products. However, a more practical and safe method of ethanol generation is the preparation of special films and sachets containing substances emitting this alcohol. To this kind of solutions belong Ethicap, Antimold 102 and Negamold (Freund Industrial Co Ltd.), Oitech (Nippon Kayaku Ltd.), ET Pack (Ueno Seiyaku Ltd.) and Ageless type SE (Mitsubishi Gas Chemical Ltd.). All such films and sachets contain absorbed or immobilized ethanol in the support material, what enables a controlled release of ethanol vapour during storage. From paper of Frankea I.; Wijmaa E.; Boumab K.; Shelf life extension of pre-baked buns by an active packaging ethanol emitter, Food Additives and Contaminants, 19(3), 2002, 314-322 is known Ethicap, which is the most common ethanol emitter in Japan and is composed of ethanol (55%) and water (10%) absorbed on the silicon dioxide powder (35%) and located in a sachet made of cellulose-paper/polyvinyl acetate laminate (EVA). To mask the smell of alcohol, some sachets contained traces of vanilla or other fragrances. Another ethanol emitters such as for example, Negamould and Ageless SE are characterized by a double action of sachets, namely they simultaneously uptake oxygen and emit ethanol vapours. The selection of appropriate sachet depends on the weight, the water activity a_{w} of the food product and its required durability. When food is packed with the sachets emitting ethanol, moisture from the air is absorbed by the food, and the released ethanol diffuses into the gaseous phase of package interior and proceeds its partial dissolution. The application of ethanol emitters in the bakery products and confectionery has been known from publication Hebeda, R. E.; Zobel, H. F., 1996, Baked Goods Freshness - Technology, Evaluation and Inhibition of Staling, Marcel Dekker, New York. The ethanol emitters were utilized to extend the shelf life of semi-dry and dry fish products as was indicated in publication Rooney, M. L. 1995, Active Food Packaging, Chapman & Hall, London. There have been also known the sachets emitting carbon dioxide and eliminating oxygen from packed food atmosphere. These sachets and labels usually contain iron carbonate and the metal halide catalysts. Such products provide the manufacturers like Mitsubishi Gas Chemical Ltd. ("Ageless" type G) and Multisorb Technologies Inc ("Freshpax" type M). From publication Vermeiren L, Devlieghere F, van Beest M, de Kruijf N, Debevere J (1999) Developments in the active packaging of foods. Trends Food Sci Technol 10(3):77-86 is known the application of these sachets with dual action (oxygen scavenger /carbon dioxide emitter) as the packaging for food products of the snack type, for example, nuts, biscuits. Additionally, the carbon dioxide emitters have found the application as the inhibitors of the growth of gram-negative bacteria or moulds, particularly in the case of such food products as: vegetable, fruits, meat and fish, as was disclosed in publication of Rodriguez-Aguilera, R.; Oliveira, J. C.; Review of Design Engineering Methods and Applications of Active and Modified Atmosphere Packaging Systems, Food Eng Rev (2009) 1:66-83. Suenaga and others in publication Suenaga H, Yamaguchi T, Furuta M, Ohta S (1995) Test of Preservation of Raw Noodles or Sandwiches using Sugar-Resistant Yeasts. Nippon Shokuhin Kagaku Kaishi (in Japanese) 42:332-337 have reported the attempts to use the yeast resistant to a high concentration of saccharose for the food preservation due to a microbiological consumption of oxygen and ethanol generation. In this case during the investigations was observed the inhibition of the growth *Aspergillus oryzae* and *E. coli* on a solid substrate, in which the yeasts were located, and the whole was closed in a tight packaging made from a highly barrier film. The studies were performed with the yeast strain S22 that grows and ferments in the presence of 40% glucose or 50% sucrose. From publication Yano, T. et al., Preservation of Raw Fish and Meat, Agricultural and Biological Chemistry, Vol.55 , No.8 (1991), 2063-2070 is known the addition of fermentation yeasts in order to preserve fresh fish and meat as an alternative to the salting. From publication Mastromatteo M.; Conte A.; Del Nobile M. A.; Combined Use of Modified Atmosphere Packaging and Natural Compounds for Food Preservation, Food Eng Rev (2010) 2:28-38 is known a modified atmosphere packaging MAP with biological active natural substances.

The description of patent JP2002142739 reveals a protective sachet for packaged food, which contains yeast or yeast with a nutrient substance and water absorbent. The sachet is made of film permeable for gases. However, there is lack of information about the structure or a special design of such sachet in the patent description.

The objective of the present invention is to develop such a construction of package containing a bioactive atmosphere modifier of packaged food so that the gases modifying atmosphere may escape freely to the packaged food. The development of a package with bioactive atmosphere modifier has the objective, firstly, the activation of microorganisms present in the composition through the delivering of water indispensable for their growth, secondly, to minimize appearing adverse odour characteristic for the alcohol fermentation. A package, according to the invention, performed from a film or laminated paper containing a bioactive atmosphere modifier of packaged food and permeable for gases generated by the modifier, is characterized by that, it contains at least one chamber, in the form of uniform or welding sleeve, in which is placed the bioactive atmosphere modifier of packaged food and the odour absorbent. The package has an intermittent weld at least on one of its sides. This weld enables a migration of moisture into the interior of the chamber and enables a migration of products of atmosphere bioactive modifier outside the chamber. Preferably the bioactive modifier contains 12-25% by weight of formulation containing 0.1-1 billion-units/1 gram of lactobacillus, 30-73% by weight of yeast, 2-45% by weight of sugar. The bioactive atmosphere modifier of packaged food allows the generation of ethanol and carbon dioxide, which extend the shelf life of packaged product. The package may contain an activator of the growth of yeast and bacteria, which has the form of dry powder or a hydrogel and constitutes alginate and/or carrageenon and/or starch or its derivatives, and/or cellulose or its derivatives. The activator is added to a bioactive modifier what facilitates the penetration of moisture into the modifier. In order to facilitate the moisture penetration into the interior of the chamber with bioactive atmosphere modifier, the package contains a hydrophilic nonwoven fabric with a high moisture absorbing capacity in the form of a strip or sachet. The strip constitutes a piece of fabrics. In the case of application of the sachet, the bioactive atmosphere modifier is placed inside its interior. In the case of the sachet, a material is a mechanical barrier to a charge (bioactive atmosphere modifier), and simultaneously its porosity allows for the permeability of gases including ethanol, water vapour and carbon dioxide. The package with one chamber may have a sachet made of a hydrophilic nonwoven fabric, which contains besides a bioactive atmosphere modifier also an odour absorbent. In such a case the bioactive modifier and odour absorbent are placed in the separate packets (both components cannot be mixed together), whereas the volatile products penetrate between the sachet pockets. The package contains hydrophilic nonwoven fabrics in the form of strip or a sachet. The strip comprises a piece of fabrics. In a variant with the sachet, an odour absorbent is placed inside its interior. In the case of the sachet, a material is a mechanical barrier to a charge - odour absorbent, and simultaneously its porosity allows for the permeability of gases such as ethanol, carbon dioxide and the volatile fragrances that are formed during the fermentation process. The nonwoven fabric allows to limit the penetration of water vapour. In the case of application of a nonwoven fabric strip, the odour absorbent is placed directly in the package chamber, and the strip decreases moisture penetration into the chamber. The package may contain both hydrophilic and hydrophobic nonwoven fabric. The bioactive atmosphere modifier needs a water source for the action. Water can be drawn from moisture contained in the environment or the package can contain an additional chamber in which a hydrated hydrogel - activator of yeast and bacteria growth is contained. The additional chamber is separated from a chamber with atmosphere bioactive modifier by a weak weld. Such weak weld after welding is tight, whereas at the moment of activation (bending/breaking of weak weld) of bioactive atmosphere modifier the weld undergoes rupture and unsealing as a result. It is also important to select such conditions of welding during the formation of a weak weld, so that a compression of the chamber filled with the hydrated hydrogel enables a rupture of weak weld connection and a mechanical over press or a slow penetration of the content of additional chamber, mainly water/water vapour, into the chamber containing the bioactive atmosphere modifier, and as a result, its activation. In the case of application of additional chamber with hydrated hydrogel as a water source, it is possible that the activator of yeast and bacteria growth in dry form was also contained in the bioactive modifier. The package, also with an additional chamber, has an odour absorbent and the bioactive atmosphere modifier, which are located in the separate chambers. These chambers are separated by an internal intermittent weld (internal intermittent weld actually separates the main package chamber into two parts). Simultaneously, each chamber has at least one side with the intermittent weld. This enables the migration of water into the interior of the chamber with bioactive atmosphere modifier and the migration of products formed during the action of modifier outside the chamber, after "passing" through the odour absorbent. Preferably the hydrophilic nonwoven fabric protrudes outside the chamber through the intermittent weld, what enables the absorption of moisture from the environment. Preferably the hydrophobic nonwoven fabric protrudes outside the chamber through the intermittent weld, what enables an effective penetration of formed purified bioactive gases (carbon dioxide and ethanol) outside the interior of the chamber containing the odour absorbent. Preferably the hydrophobic nonwoven fabric protrudes outside the chamber through the intermittent weld, what enables an effective penetration of formed bioactive gases (carbon dioxide and ethanol) outside the interior of the chamber in which they are generated. It is also possible, that the hydrophobic nonwoven fabric protrudes outside the chamber through the intermittent weld and through the internal intermittent weld. A film can be any film made of plastic, which is approved for contact with food and is characterized by a high water resistance and barrier properties to gases and high susceptibility to welding. Preferably a film constitutes polyethylene PE, polypropylene PP or composite multilayer films particularly polyamide/polyethylene PA/PE, polyamide/polypropylene PA/PP, poly(ethylene terephthalate)/polyethylene PET/PE, poly(ethylene terephthalate)/polypropylene PET/PP. A hydrophilic nonwoven fabric can be any fibrous material with a high permeability to gases, including water vapour and water. Preferably it constitutes a viscose nonwoven fabric and/or cellulosic nonwoven fabric, particularly in the form of paper, tissue paper or cardboard. Preferably a hydrophobic nonwoven fabric constitutes a polypropylene nonwoven fabric and/or polyester nonwoven fabric. In the package, instead of film made of plastic can be used a paper laminated with one or both sides, particularly with grammage up to 100g/m² preferably up to 60 g/m² and possessing the ability to weld. Preferably an odour absorbent constitutes activated carbon and/or zeolite and/or sodium bentonite. Each of mentioned above odour absorbent may be in the pure form, but also in the form adequately modified physically or chemically. This absorbent prevents the occurrence of characteristic odour of fermentation in the space with food product due to the action of the constituents of bioactive modifier. Preferably the odour absorbent is in the form of granulate. The odour absorbent is used preferably in the amount up to 50% by weight. Preferably sugar constitutes sucrose and/or glucose and/or maltose and/or lactose. Preferably yeast comprises *Saccharomyces cerevisiae* and/or *Saccharomyces carlsbergensis* and/or *Saccharomyces ellipsoideus.* Preferably lactobacillus comprises *Lactobacillus sp,* in particular *Lactobacillus plantarum* and/or *Lactobacillus acidophilus* and/or *Lactobacillus delbrueckii* and/or *Lactobacillus rhamnosus* and/or *Lactobacillus fermentum.* Preferably the bioactive atmosphere modifier contains lactobacillus with permissible admixture of *Bifidobacterium lactis.*

The advantage of this solution is that packaged food products do not have a direct contact with bioactive atmosphere modifier, what makes they will not be contaminated by the modifier. A universal construction of the package enables its application as both a fragment of product package or in the form of sachet, which is placed in the food product package. The application of intermittent welds enables the migration of modifier products (ethanol and carbon dioxide) and moisture penetration. A construction of package enables storage of bioactive modifier and its activation at the desired moment (package with modifier can be previously prepared, and then activate it through a weak weld, which can be ruptured at the moment of packaging of food product). The bioactive modifier can be activated externally through the absorption of moisture from exterior (for example, from packaged food product or before the use the package is briefly immersed in water) or it can be activated internally, that is to use an additional chamber with water source. A versatile packaging design enables for free adjustment of its size (dimensions) to the needs of packaged food.

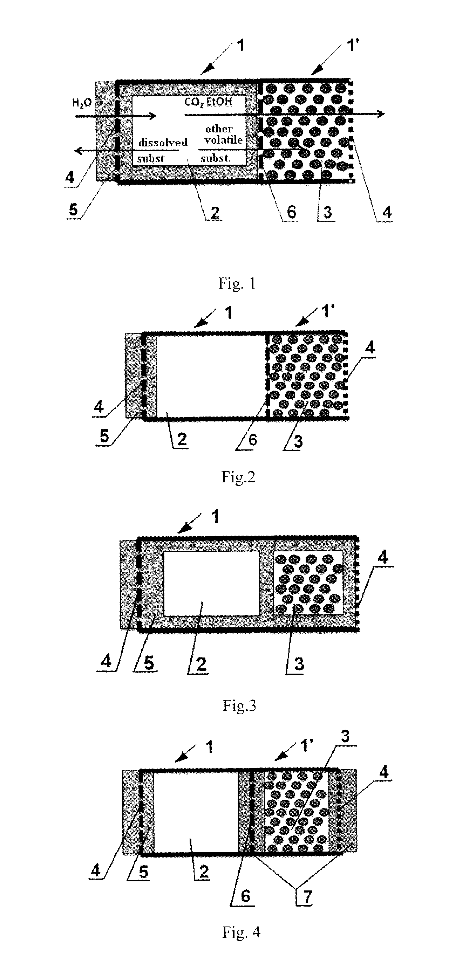

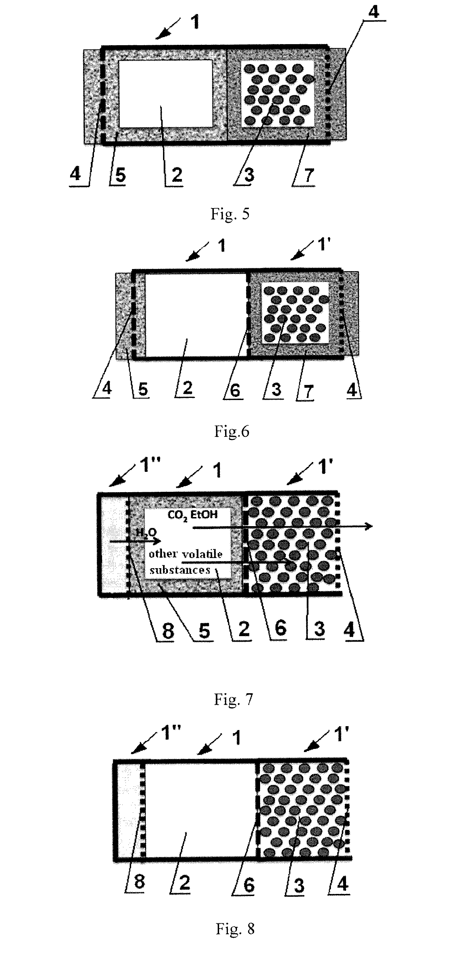

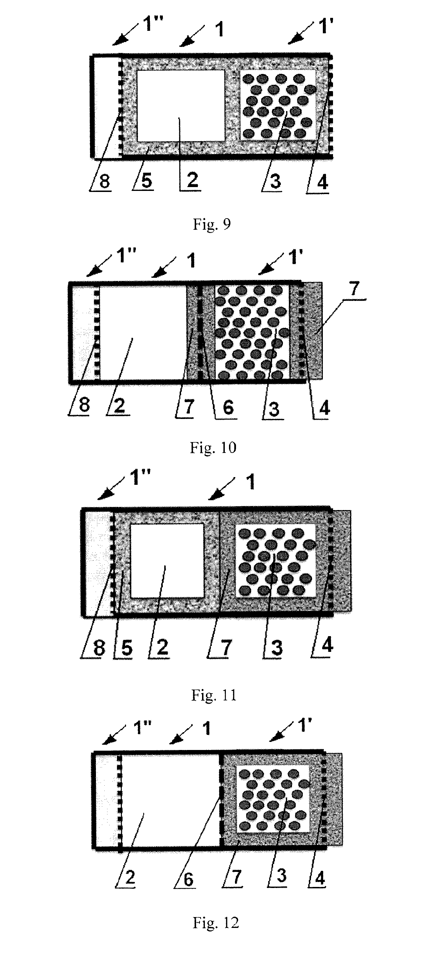

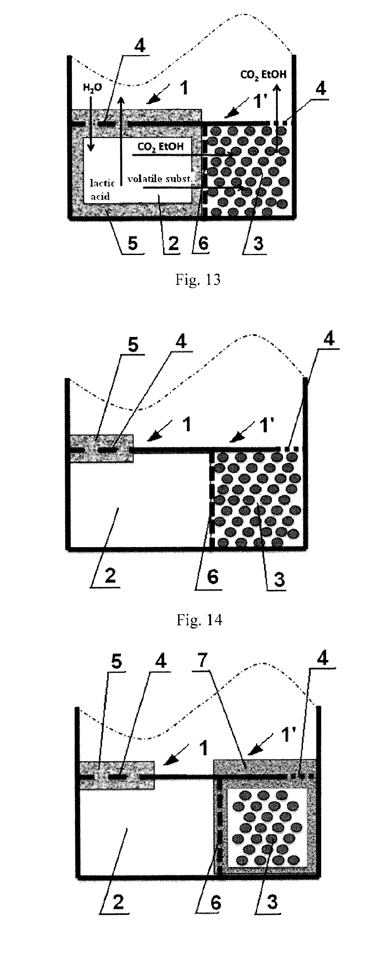

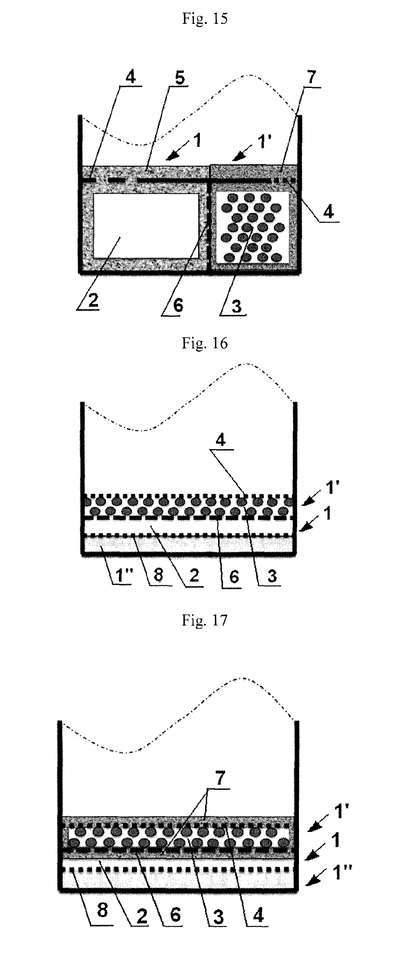

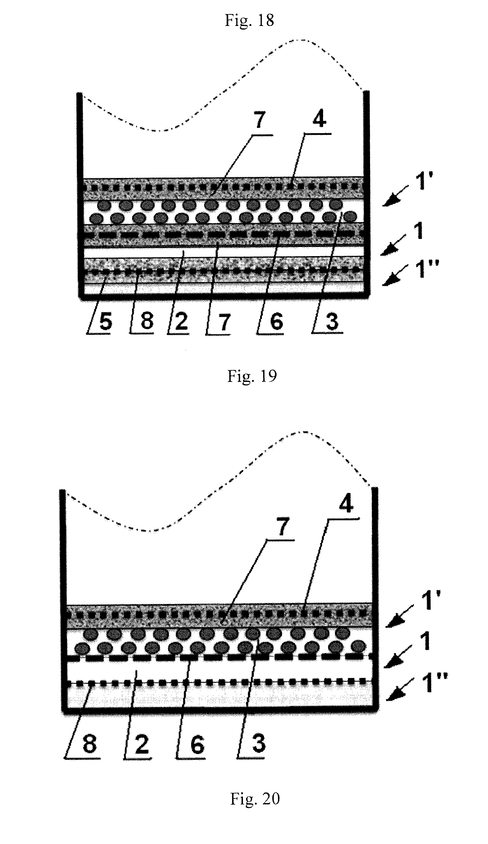

The invention is further illustrated in the following examples of its realization and on a pictorial drawing in which Figure 1 presents a package with two chambers and a sachet made of a hydrophilic nonwoven fabric, Fig. 2 presents a package with two chambers and a strip made of a hydrophilic nonwoven fabric, Fig. 3 presents a package with one chamber and a sachet made of a hydrophilic nonwoven fabric divided into two pockets, Fig. 4 presents a dual-chamber package with the strips made of a hydrophilic and hydrophobic nonwoven fabric, Fig. 5 presents a package with one chamber and a sachet made of a hydrophilic and hydrophobic nonwoven fabric, Fig. 6 presents a package with two chambers and a strip made of a hydrophilic nonwoven fabric and with a sachet made of a hydrophobic nonwoven fabric, Fig. 7 presents the package from Fig. 1 with additional chamber, Fig. 8 presents the package from Fig. 2 with additional chamber, Fig. 9 presents the package from Fig. 3 with additional chamber, Fig. 10 presents the package from Fig. 4 with additional chamber, Fig. 11 presents the package from Fig. 5 with additional chamber, Fig. 12 presents the package from Fig. 6 with additional chamber, Fig. 13 presents the package from Fig. 1 constituted a fragment of food package, Fig. 14 presents the package from Fig. 2 constituted a fragment of food package, Fig. 15 presents the package from Fig. 4 constituted a fragment of food package, Fig. 16 presents the package from Fig. 5 with two chambers and constituted a fragment of food package, Fig. 17 presents a variant of package from Fig. 8, Fig. 18 presents a variant of package from Fig. 12, Fig. 19 presents a package with an additional chamber, a chamber with bioactive modifier, a chamber with odour absorbent and with the strips made of a hydrophilic and hydrophobic nonwoven fabric, Fig. 20 presents a variant of package from Fig. 10. A package from drawings and examples 1-6 has the form of sachets and they are activated externally by moisture originating from the external environment. A package from drawings and examples 7-12 has the form of sachet activated internally by water from the additional chamber with hydrated hydrogel. A package from drawings and examples 13-16 constitutes a fragment of package for food product and is activated externally by moisture originating from the external environment. A package from drawings and examples 17-20 constitutes a fragment of package for food product and is activated internally by water from the additional chamber with hydrated hydrogel.

### Example I Fig. 1

A package constitutes a sachet, which is located inside a package of food product. The package has the form of sleeve with two chambers 1 and 1'. Inside the chamber 1 is located a bioactive atmosphere modifier 2 with the composition comprising 20% by weight of formulation containing 0.1 billion units/1 gram of lactobacillus - *Lactobacillus plantarum,* 60% by weight of bakery yeast *Saccharomyces cerevisiae* instant and 20% by weight of sugar - saccharose. In the chamber 1' is located an odour absorbent 3 - activated carbon. Externally the intermittent welds 4 terminate the chambers 1 and 1'. The bioactive modifier 2 is placed in a sachet made of a hydrophilic nonwoven fabric. An internal intermittent weld 6 separates the chambers 1 and 1'. The preparation of package is as follows: a weldable hydrophilic nonwoven fabric 5 - viscose nonwoven fabric with grammage of 40g/m² (Termonina, Lentex S.A.) possessing the thermo-welding properties with the dimensions 3x6 cm is sealed on three sides with an impulse welder with width of the weld about 2 mm at temperature 120°C and welding time 1-2 seconds. A bioactive atmosphere modifier 2 is introduced into such prepared sachet in the amount of 4 grams; subsequently an open connection is welded at a distance of 1 cm from the outer edge by means of impulse welder (120°C, welding time 2 seconds).

A film with the PA/PE structure and the thickness of 60 µm (Gqsior(R)Bagfilm G (BGB) Supravis Group S.A., Bydgoszcz) in the form of sleeve with a homogeneous structure with width 4 cm is cut into pieces with a length of 8 cm, subsequently is welded with the internal intermittent weld 6 in a perpendicular direction at a distance of 1 cm from the outer edge by means of impulse welder TYP: FS 300 ABS (Halinex, Polska) with width of the weld 2 mm (lower jaw covered with Teflon film, upper jaw in the form of serrated hard rubber with 2 mm teeth and a distance between teeth 2 mm (welding time 2 seconds). An internal intermittent weld 6 is achieved separating the sleeve into two chambers 1 and 1', consecutively with a height of about 2.5 and 5.5 cm.

An odour absorbent 3 - granular activated carbon (Chempur, Piekary Śl 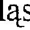 skie) is introduced into a smaller chamber 1' in the amount of about 0.5 grams. The chamber 1' is closed by an intermittent weld 4 performed by an impulse welder.

A fleece sachet 5 containing a bioactive atmosphere modifier 2 is introduced into the second chamber. The sachet protrudes out of the chamber 1. An intermittent weld 4 closes the chamber 1. The package obtained in such a way can be used applied immediately or can be storage in large quantities in the environment ensuring the stability of used bioactive modifier 2 of atmosphere.

### Example II Fig. 2

A package performed in the same manner as in Example I, wherein the bioactive modifier 2 is directly introduced into the chamber 1 from which protrudes outside a strip made of a hydrophilic nonwoven fabric 5 - cellulosic nonwoven fabric. The strip 5 is performed by cutting-out a fragment of material from a nonwoven fabric and fixation by means of intermittent weld 4. The bioactive modifier 2 has the form of powdered mixture: 40% by weight yeast - *Saccharomyces cerevisiae, Saccharomyces carlsbergensis, Saccharomyces ellipsoideus* instant in the ratio 1:1:1, 15% by weight lactobacillus - *Lactobacillus plantarum* and 20% by weight sugar - maltose and 25% by weight of an activator of yeast and bacteria growth in the form of dry powder - alginate. The package is performed from two pieces of PE film welded on the sides and thus forming a sleeve.

### Example III Fig. 3

A package performed in the same manner as in Example I, wherein said package has one chamber 1. In a sachet 5 are placed both the bioactive modifier 2 and the odour absorbent 3 - sodium bentonite (20% by weight in relation to bioactive modifier 2), wherein both components are located in the separate pockets, so that they cannot mix, but simultaneously the volatile products have the possibility to penetrate between the pockets (intermittent weld). The bioactive modifier 2 has the form of powdered mixture: 73% by weight yeast - *Saccharomyces carlsbergensis and Saccharomyces ellipsoideus* instant, 25% by weight lactobacillus - *Lactobacillus delbrueckiiand plantarum* and *Lactobacillus rhamnosus* and *Lactobacillus fermentum* in the ratio 2:1:1, and contains a permissible admixture of *Bifidobacterium lactis* and 2% by weight sugar - glucose and lactose in the ratio 1:5. The package is performed from one side laminated paper.

### Example IV Fig. 4

A package performed in the same manner as in Example II, wherein both welds 4 and 6 immobilize the strips made of hydrophobic nonwoven fabric 7. The package is performed from PA/PP film. The bioactive modifier 2 has the analogous form as in Example III, wherein said modifier contains additionally an activator of yeast and bacteria growth in the form of starch derivative in the amount of 30% by weight.

### Example V Fig. 5

A package performed in the same manner as in Example III, wherein an odour absorbent 3 is located in a sachet made of hydrophobic nonwoven fabric 7 - connection of polyester and polypropylene nonwoven fabric, the edge of which protrudes outside of the package and is immobilized by an intermittent weld 4.

### Example VI Fig. 6

A package performed in the same manner as in Example IV, wherein an odour absorbent 3 is located in a sachet made of hydrophobic nonwoven fabric 7 - polyester nonwoven fabric, the end of which protrudes outside of the package. The sachet 7 is immobilized by an intermittent weld 4.

### Example VII Fig. 7

A package performed in the same manner as in Example I, wherein said package contains an additional chamber 1" with hydrated hydrogel (water source) - a mixture of sodium alginate and carrageenon. The additional chamber 1" is only adjacent to a chamber 1 and is separated from the chamber 1 by a weak weld 8. The package can be stored for later use. At the moment of placing in the package with food product, the chamber 1 or an additional chamber 1" is pressed and rupture the weak weld 8 under press. It causes the activation of the bioactive modifier 2.

### Example VIII Fig. 8

A package performed in the same manner as in Example II, wherein said package contains an additional chamber 1" with hydrated hydrogel (water source) - a starch derivative. The additional chamber 1" is only adjacent to a chamber 1 and is separated from the chamber 1 by a weak weld 8. The package does not contain a hydrophilic nonwoven fabric 5.

### Example IX Fig. 9

A package performed in the same manner as in Example III, wherein said package contains an additional chamber 1 " with hydrated hydrogel (water source) - carrageenon. The chamber 1" is only adjacent to a chamber 1 and is separated from said chamber 1 by a weak weld 8.

### Example X Fig. 10

A package performed in the same manner as in Example IV, wherein said package contains an additional chamber 1" with hydrated hydrogel (water source) - starch mucilage. The chamber 1" is only adjacent to a chamber 1 and is separated from said chamber 1 by a weak weld 8. The package does not contain a hydrophilic nonwoven fabric 5.

### Example XI Fig. 11

A package performed in the same manner as in Example V, wherein said package contains an additional chamber 1" with hydrated hydrogel (water source) - (as in Example X) starch mucilage. The chamber 1" is only adjacent to a chamber 1 and is separated from said chamber 1 by a weak weld 8.

### Example XII Fig. 12

A package performed in the same manner as in Example VI, wherein said package contains an additional chamber 1" with hydrated hydrogel (water source). The chamber 1" is only adjacent to a chamber 1 and is separated from said chamber 1 by a weak weld 8. The package does not contain a hydrophilic nonwoven fabric 5.

### Example XIII Fig. 13

A package performed in the same manner as in Example I, wherein said package constitutes a fragment of food product package. The package is performed from PP film.

### Example XIV Fig. 14

A package performed in the same manner as in Example II, wherein said package constitutes a fragment of food product package. The package is performed from paper laminated on both sides.

### Example XV Fig. 15

A package performed in the same manner as in Example IV, wherein said package constitutes a fragment of food product package.

### Example XVI Fig. 16

A package performed in the same manner as in Example V, wherein said package constitutes a fragment of food product package and has two chambers: chamber 1 with the bioactive modifier 2 in a sachet made of hydrophilic nonwoven fabric 5 and chamber 1' with odour absorbent 3 in a sachet made of hydrophobic nonwoven fabric 7 - polypropylene nonwoven fabric. An internal intermittent weld 6 separates the chambers 1 and 1'.

### Example XVII Fig. 17

A package performed in the same manner as in Example VIII, wherein said package constitutes a fragment of food product package.

### Example XVIII Fig. 18

A package performed in the same manner as in Example X, wherein said package constitutes a fragment of food product package. An odour absorbent 3 is located in a sachet made of hydrophobic nonwoven fabric 7, the ends of which protrude outside the chamber 1', from one side they protrude into chamber 1, from the other side they protrude outside, beyond an intermittent weld 4 into the space, in which is located the food product.

### Example XIX Fig. 19

A package performed in the same manner as in Example X, wherein said package contains an additional strip made of hydrophilic nonwoven fabric 5 located both in the chamber 1 and chamber 1'. The package constitutes a fragment of food product package.

### Example XX Fig. 20

A package performed in the same manner as in Example X, wherein said package constitutes a fragment of food product package and does not contain a strip made of hydrophobic nonwoven fabric 7 between the chambers 1 and 1'.

## Claims

1. A package performed from a film or a laminated paper containing a bioactive atmosphere modifier of packaged food and permeable to the gases generated by the modifier, **wherein** said package contains at least one chamber (1) in the form of uniform or welding sleeve, in which is placed a bioactive atmosphere modifier (2) of packaged food and an odour absorbent (3), wherein said package has an intermittent weld (4) on at least one side.

2. A package according to claim 1, **wherein** said bioactive atmosphere modifier (2) contains 12-25% by weight of formulation containing 0.1-1 billion units/1 gram of lactobacillus, 30-73% by weight of yeast, 2-45% by weight of sugar.

3. A package according to claim 1, **wherein** said package contains an activator of the growth of yeast and bacteria which has the form of dry powder or a hydrogel and constitutes alginate and/or carrageenon and/or starch or its derivatives, and/or cellulose or its derivatives.

4. A package according to claim 1, **wherein** said package contains a hydrophilic nonwoven fabric (5) in the form of a strip or sachet, in which is located the bioactive atmosphere modifier (2).

5. A package according to claim 4, **wherein** said sachet (5) contains an odour absorbent (3).

6. A package according to claim 1or 4, **wherein** said package contains a hydrophobic nonwoven fabric (7) in the form of a strip or sachet, in which is located the odour absorbent (3).

7. A package according to claim 1or 3, **wherein** said package contains an additional chamber (1"), in which is located a hydrated hydrogel, separated by a weak weld (8) from a chamber (1) with the bioactive atmosphere modifier (2).

8. A package according to claim 1or 7, **wherein** said odour absorbent (3) and the bioactive atmosphere modifier (2) are located in the separate chambers (1, 1') separated by the internal intermittent weld (6), wherein each of the chambers (1, 1') has at least one side with the intermittent weld (4).

9. A package according to claim 4, **wherein** said hydrophilic nonwoven fabric (5) protrudes outside a chamber through the intermittent weld (4).

10. A package according to claim 6, **wherein** said hydrophobic nonwoven fabric (7) protrudes outside the chamber (1') through the intermittent weld (4) and/or through the internal intermittent weld (6).

11. A package according to claim 1, **wherein** a film constitutes polyethylene PE, polypropylene PP or composite multilayer films, particularly polyamide/polyethylene PA/PE, polyamide/polypropylene PA/PP, poly(ethylene terephthalate)/polyethylene PET/PE, poly(ethylene terephthalate)/polypropylene PET/PP.

12. A package according to claim 4, **wherein** said hydrophilic nonwoven fabric (5) constitutes a viscose nonwoven fabric and/or cellulosic nonwoven fabric.

13. A package according to claim 6, **wherein** said hydrophobic nonwoven fabric (7) constitutes a polypropylene nonwoven fabric and/or polyester nonwoven fabric.

14. A package according to claim 4, **wherein** said paper is laminated on one side or on both sides.

15. A package according to claim 4, **wherein** said odour absorbent (3) constitutes activated carbon and/or zeolite and/or sodium bentonite.
